(19) Europäisches Patentamt
European Patent Office
Office européen des brevets

(11) **EP 3 025 140 B1**

(12) **FASCICULE DE BREVET EUROPEEN**

(45) Date de publication et mention
de la délivrance du brevet:
**26.08.2020 Bulletin 2020/35**

(21) Numéro de dépôt: **13731379.7**

(22) Date de dépôt: **30.05.2013**

(51) Int Cl.:
***G01N 1/22*** *(2006.01)*

(86) Numéro de dépôt international:
**PCT/FR2013/051224**

(87) Numéro de publication internationale:
**WO 2013/178958 (05.12.2013 Gazette 2013/49)**

(54) **DISPOSITIF ET PROCÉDÉ DE PRÉLÈVEMENT D'AIR POUR MESURE D'AMIANTE, FIBRES ET/OU MÉTAUX EN SUSPENSION ATMOSPHÉRIQUE**

VORRICHTUNG UND VERFAHREN ZUR ABTASTUNG VON LUFT ZUR MESSUNG VON ASBEST, FASERN UND/ODER METALLEN IN ATMOSPHÄRISCHER SUSPENSION

DEVICE AND METHOD FOR SAMPLING AIR FOR MEASURING ASBESTOS, FIBRES AND/OR METALS IN ATMOSPHERIC SUSPENSION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**01.06.2016 Bulletin 2016/22**

(73) Titulaire: **AC-SP Etude & Recherche En Hygiène Industrielle**
**30126 Saint-Laurent-Des-Arbres (FR)**

(72) Inventeurs:
• **MONBOEUF, Pascal**
  **F-83560 Vinon Sur Verdon (FR)**
• **PLATON, Frédéric**
  **F-13520 Le Paradou (FR)**

(74) Mandataire: **Cornuejols, Georges**
**Cassiopi**
**230 Avenue de l'Aube Rouge**
**34170 Castelnau-le-Lez (FR)**

(56) Documents cités:
**WO-A1-2011/117115      GB-A- 1 165 769**
**US-A- 4 257 746        US-A- 5 333 511**
**US-A- 5 892 160        US-A- 5 932 795**
**US-A- 6 138 521        US-A1- 2006 234 621**
**US-A1- 2008 281 528    US-B1- 6 167 767**

EP 3 025 140 B1

**Description**

**ARRIERE-PLAN DE L'INVENTION**

Domaine de l'invention

La présente invention concerne un procédé et un dispositif de prélèvement d'air en vue d'analyse et de la mesure de quantité de particules, notamment d'amiante, fibres et/ou métaux, en suspension atmosphérique. Elle s'applique, en particulier, au domaine de la mesure de la qualité de l'air et de la prévention des pathologies liées à la présence d'amiante atmosphérique.

Arrière-plan technologique

L'amiante et ses dérivés industriels représentent un danger réel pour la santé : les particules d'amiantes, notamment celles inférieures à trois microns peuvent créer des troubles graves dans l'organisme entrainant la mort des personnes contaminées, la maladie pouvant se déclarer parfois plusieurs dizaines d'années après la contamination.

Ces microparticules peuvent être présentes dans l'eau ou dans l'air, de manière naturelle (zones de montagnes exposées à l'érosion) ou artificielle (abords de bâtiments amiantés mal isolés, travaux de désamiantage mal effectués).

La nocivité de ce matériau a été reconnue en France en 1997.

Actuellement en France, seulement 5% des bâtiments contenant de l'amiante ont été traités. Compte tenu des moyens actuels, il faudrait deux siècles avant de débarrasser la France d'un matériau dont la nocivité a été reconnue en 1997.

Deux normes régissent son utilisation :

- la norme AFNOR X 43-269 qui traitent des concentrations en milieu de travail et qui sont exprimées en fibre / cm³.
- la norme AFNOR X 43-050 qui traite des teneurs dans l'atmosphère des immeubles bâtis et dans l'environnement et qui sont exprimées en fibre / litre.

Il est connu des préleveurs d'air pour amiante (ACS) selon deux catégories :

- ceux dont l'objectif est de détecter la présence d'amiante. Actuellement, ils sont équipés de filtre de 0,8 micron en vue d'analyse par Microscope Optique à Capteur de Phase (MOCP) afin de détecter la présence d'amiante. Ce type de procéder détecte uniquement les fibres longues et
- ceux dont l'objectif est de mesurer les quantités d'amiante. Ils fonctionnent avec des filtres de 0,45 micron en vue d'analyse par Microscopie Electronique à Transmission Analytique (META) afin de mesurer le nombre de fibres longues et courtes. Ce type de procéder permet de mesurer à la fois les fibres longues et les fibres courtes.

Les documents US 6 167 767 B1, US 2006/234621 A1 et US 2008/281528 A1 divulguent des autres dispositifs de prélèvement d'air.

Le principe de fonctionnement d'un préleveur d'air pour amiante est le suivant :

- l'air est aspiré par une pompe,
- le débit réglementaire est mesuré par un débitmètre et asservi par un système de régulation,
- l'air aspiré traverse une membrane sur laquelle viennent se déposer les fibres d'amiantes
- une fois la durée réglementaire de la mesure passée, la membrane est envoyée à un laboratoire agréé pour qu'il effectue des mesures et détermine le taux d'amiante dans le volume testé.

Les laboratoires de contrôle ont ainsi une position centrale dans la filière. Leurs rôles sont les suivants :

- l'analyse des échantillons de matériaux ou produits susceptibles de contenir de l'amiante en vue de l'identification de la fibre des échantillons prélevés par les entreprises de diagnostic et de désamiantage ;
- le prélèvement des échantillons en vue du contrôle de l'empoussièrement et de la valeur limite d'exposition professionnelle ;
- l'analyse des échantillons prélevés en vue du contrôle de l'empoussièrement précité.

Pour procéder à ces contrôles, les laboratoires sont accrédités pour les différentes catégories d'analyse et doivent respecter les normes techniques fixées dans les textes en matière d'analyse.

Actuellement, il n'existe sur le marché aucun produit portable qui permette de réaliser des prélèvements en vue d'analyses META avec des filtres de 0,45 micron. Les pompes actuellement utilisées sur les appareils destinés à recueillir les fibres de 0,8 micron ne sont pas compatibles avec l'utilisation de filtres 0,45 micron car les pertes de charges engendrées par ces filtres sont beaucoup plus importantes. A l'inverse, les pompes utilisées actuellement sur les appareils destinés à recueillir les fibres de 0,45 micron sont lourdes et ne sont pas utilisables dans un appareil portable.

De plus, ces appareils sont destinés à recueillir les fibres dans un volume d'air donné. Or, avec les variations de températures, les conditions hygrométriques, la pression atmosphérique (altitude, dépression, anticyclones) ainsi que les coefficients d'erreur de chaque élément mécanique, ce volume d'air peut correspondre à différentes masses d'air. Les mesures ainsi réalisées ne permettent pas de mesurer une masse de fibres par unité de masse d'air.

## BREVE DESCRIPTION DE L'INVENTION

La présente invention vise à remédier à ces inconvénients.

A cet effet, la présente invention vise, selon un premier aspect, un dispositif de prélèvement d'air en vue d'analyse et de la mesure de quantité de particules en suspension atmosphérique selon la revendication 1, qui comporte :

- une entrée de prélèvement d'air,
- une pompe reliée à ladite entrée de prélèvement d'air,
- un filtre configuré pour retenir des particules en suspension dans l'air pompé,
- un débitmètre massique configuré pour mesurer le débit massique d'air traversant le filtre,
- un capteur de pression,
- un capteur de température,
- un capteur de taux d'humidité dans l'air,
- un moyen de modulation du débit d'air traversant le filtre et
- un moyen d'asservissement du moyen de modulation en fonction du débit massique, de la température, du taux d'humidité et de la pression atmosphérique configuré pour que le débit mesuré en moles d'air sec par unité de temps soit sensiblement constant.

Grâce à ces dispositions, la masse d'air sec traversant le filtre est mesurée et asservie. La détection de particules d'amiante est ainsi normalisée en fonction de la masse d'air sec. En particulier, le dispositif compense automatiquement les différences de pression d'air atmosphérique liées à l'altitude ou aux phénomènes météorologiques. Ces dispositions permettent aussi de compenser la perte de charge créée par l'empoussièrement progressif de la membrane lors de la durée du prélèvement par procédé électronique.

Dans des modes de réalisation, le moyen de modulation comporte une vanne proportionnelle.

Dans des modes de réalisation, le dispositif objet de l'invention comporte une tête de prélèvement qui se fixe sur une partie solidaire d'une perche de prélèvement, par verrouillage en un quart de tour.

Cela permet à l'opérateur de facilement mettre en place l'appareil dans des conditions où l'accès est difficile. Actuellement, toutes les têtes sont verrouillées par double clipsage (mettant en oeuvre des fixations à ressort, ou clips), ce qui nécessite que l'opérateur utilise ses deux mains pour l'opération.

Dans des modes de réalisation, l'entrée de prélèvement est adaptée à tenir en position un filtre qui retient des particules de 0,45 micromètres.

Le dispositif objet de l'invention prélève ainsi des particules particulièrement fines.

Dans des modes de réalisation, la pompe est commandée par une régulation électronique à variation de tension.

Par exemple, le filtre est un filtre de type dit Millipore (marque déposée). Cette disposition permet au filtre de travailler dans les mesures d'amiante et est conforme à la norme sur ce secteur.

Dans des modes de réalisation, la pompe est commandée par une régulation électronique à variation de tension.

Dans des modes de réalisation, une électrovanne est disposée entre l'entrée de prélèvement d'air et l'aspiration de la pompe.

On évite ainsi, pour les faibles débits d'air de faire passer dans le filtre, les effets néfastes liés au pompage à très faible débit.

De plus, dans des modes de réalisation, l'électrovanne sert à l'asservissement du débit, la pompe fournissant un débit d'air constant au cours du prélèvement d'air. On évite ainsi un vieillissement prématuré de la pompe.

Dans des modes de réalisation, le dispositif comporte un moyen d'arrêt de la pompe configuré pour arrêter la pompe en cas de chute de débit supérieur à une valeur prédéterminée et à relancer la pompe après une durée prédéterminée.

Par exemple, cette durée est de cinq secondes.

Dans des modes de réalisation, le dispositif comporte un moyen de mémorisation par une mémoire amovible de la quantité d'air ayant traversé le filtre, de la durée de pompage d'air et de chaque arrêt de la pompe.

Grâce à ces dispositions, une traçabilité du prélèvement d'air est assurée, ce qui augmente la fiabilité des prélèvements réalisées grâce au dispositif objet de l'invention.

Par exemple, la mémoire amovible est une carte mémoire ou une clé mettant en œuvre le protocole USB (acronyme de « Universal Serial Bus », pour bus série universel).

Grâce à ces dispositions, la mémoire amovible peut être lue sur de nombreux ordinateurs personnels, portables ou non.

Selon un deuxième aspect, la présente invention vise un procédé de prélèvement d'air en vue d'analyse et de la mesure de quantité de particules en suspension atmosphérique selon la revendication 10, qui comporte :

- une étape de pompage avec une pompe reliée à une entrée de prélèvement d'air,
- une étape de filtrage pour retenir des particules en suspension dans l'air pompé,
- une étape de mesure de débit massique pour mesurer le débit massique d'air traversant le filtre,
- une étape de mesure de la température,
- une étape de mesure du taux d'humidité dans l'air,
- une étape de mesure de la pression atmosphérique et
- une étape d'asservissement du débit mesuré en moles d'air sec par unité de temps en fonction du débit massique, de la température, du taux d'humidité et de la pression atmosphérique.

Les avantages, buts et caractéristiques particulières de ce procédé étant similaires à ceux du dispositif objet de la présente invention, ils ne sont pas rappelés ici.

## BREVE DESCRIPTION DES DESSINS

D'autres avantages, buts et caractéristiques de la présente invention ressortiront de la description qui va suivre faite, dans un but explicatif et nullement limitatif, en regard des dessins annexés, dans lesquels :

- la figure 1 représente, schématiquement, un premier mode de réalisation du dispositif de prélèvement objet de la présente invention,
- la figure 2 représente, schématiquement, un deuxième mode de réalisation du dispositif de prélèvement objet de la présente invention,
- la figure 3 est une vue en coupe d'un mode de réalisation particulier du dispositif illustré en figure 1, sans boîtier ni perche,
- la figure 4 est une vue en perspective du mode de réalisation illustré en figure 3, sans boîtier, tête de prélèvement, ni perche,
- la figure 5 est une vue en perspective du mode de réalisation illustré en figure 3, sans boîtier ni perche,
- la figure 6 est une vue en perspective du mode de réalisation illustré en figure 3 à 5, avec boîtier mais sans perche,
- la figure 7 représente, en coupe, une tête de prélèvement pour un dispositif objet de la présente invention,
- la figure 8 représente, en perspective, la tête de prélèvement illustrée en figure 7,
- la figure 9 représente, sous forme d'un logigramme, des étapes mises en œuvre dans un mode de réalisation particulier du procédé objet de la présente invention,
- la figure 10 représente, sous forme d'un schéma bloc, des fonctions d'un deuxième mode de réalisation du dispositif de prélèvement objet de la présente invention et
- la figure 11 représente, sous forme d'un schéma bloc, des fonctions faisant partie d'un bloc illustré en figure 10.

## DESCRIPTION DETAILLEE DE MODES DE REALISATION DE L'INVENTION

On note que les figures ne sont pas à l'échelle et que les éléments qu'elles représentent peuvent être à des échelles différentes pour en faciliter la compréhension.

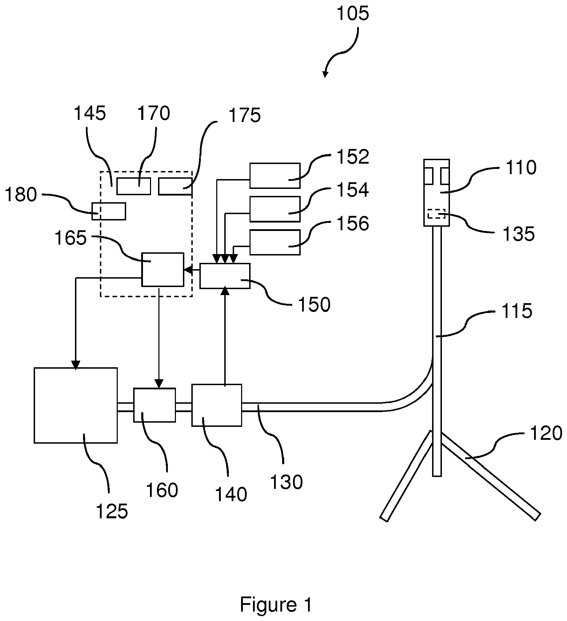

On observe, en figure 1, un dispositif 105 de prélèvement d'air en vue d'analyse et de la mesure de quantité de particules, notamment d'amiante, fibre et/ou métaux, en suspension atmosphérique, qui comporte :

- une tête 110 de prélèvement d'air montée sur une perche 115 munie d'un trépied 120,
- une pompe 125 reliée à ladite tête de prélèvement d'air 110 par un tuyau 130,
- un filtre 135 intégré à la tête de prélèvement 110 configuré pour retenir des particules en suspension dans l'air pompé,
- un débitmètre massique 140 qui mesure le débit massique d'air traversant le filtre 135,
- un capteur de pression atmosphérique 152,
- un capteur de température atmosphérique 154,
- un capteur de taux d'humidité dans l'air 156,
- un moyen 145 de modulation du débit d'air traversant le filtre 135 et
- un moyen 150 d'asservissement du moyen de modulation 145 en fonction du débit massique mesuré par le débitmètre 140.

Dans des modes de réalisation, les capteurs 152, 154 et 156 sont intégrés ou associés au débitmètre massique 140. Préférentiellement, le débitmètre massique 140 comporte les capteurs 154 et 156 et réalise ainsi une compensation en température et en humidité faisant partie du moyen d'asservissement 150.

Le moyen 150 d'asservissement du moyen de modulation 145 est configuré pour que, en fonction du débit massique, de la température, du taux d'humidité et de la pression atmosphérique, le débit, mesuré en moles d'air sec par unité de temps, soit sensiblement constant.

Par l'approximation des gaz parfaits, le nombre de moles n par unité de temps est de :

$$n = PV/RT$$

Formule dans laquelle

P est la pression,
V est le volume passant par unité de temps
T est la température en degrés kelvin et
R est une constante.

On note que le taux d'humidité est relevé et régulé directement par le débitmètre massique. C'est le composant lui-même qui gère la compensation en fonction du taux relevé.

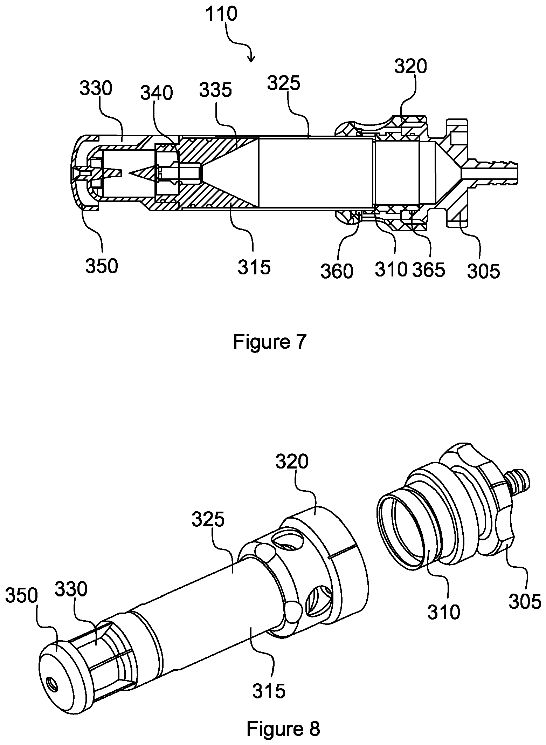

Un exemple de tête de prélèvement 110 est représenté en figures 7 et 8. La perche 115, le trépied 120 et le tuyau 130 sont de type connu.

Le débitmètre 140 mesure ainsi bien le débit d'air traversant le filtre 135.

Une électrovanne 160 est positionnée en amont ou en aval de la pompe 125, sur le circuit d'air, par exemple entre l'entrée de prélèvement d'air et l'aspiration de la pompe. Préférentiellement, l'électrovanne 160 sert uniquement à l'asservissement du débit, la pompe 125 fournissant un débit d'air maximum.

Le filtre 135 est tenu en position par la tête de prélèvement 110. Le filtre 135 est adaptée à retenir des particules de 0,45 micromètres et plus.

Le débitmètre massique 140 est, préférentiellement, compensé en température.

Le moyen de modulation 145 comporte l'électrovanne proportionnelle 160, commandée par un circuit électronique de régulation 165.

Le circuit électronique de régulation 165 est aussi configuré pour arrêter la pompe 125 en cas de chute du débit mesuré par le débitmètre 140 en deçà d'une valeur prédéterminée et à relancer la pompe après une durée prédéterminée, par exemple de cinq secondes. Grâce à cette régulation du débit, avec compensation de pertes de charge, le débit reste, en permanence à moins de 3 % de la valeur consigne.

Sept touches de réglage ainsi qu'un système de verrouillage 170, de type connu, permettent à l'opérateur de régler, en dialogue avec le circuit 165, les valeurs de consignes qui sont alors simultanément affichées sur un écran 175 :

- heure, date, jour,
- le débit programmé,
- durée ou périodes de prélèvement programmée(s),
- la remise à zéro d'un compteur de durée de prélèvement,
- la remise à zéro d'un compteur volumétrique,
- codes de mise en service d'une mémoire amovible 180 et
- code totalisateur compteur horaire et volumétrique, pour maintenance et SAV.

Le circuit 165 et l'écran 175 sont aussi adaptés à afficher :

- le débit instantané,
- la valeur du compteur horaire de durée de prélèvement,
- la valeur du compteur volumétrique d'air prélevé et
- l'état de charge de la batterie.

La mémoire amovible 180 est, par exemple, une carte SD (sigle de l'expression en anglais « Secure Digital » pour numérique sécurisé) ou une clé USB, (acronyme de Universal Serial Bus, pour bus série universelle).

Le circuit électronique de régulation 165 est aussi configuré pour provoquer la mémorisation dans la mémoire amovible 180, de la quantité d'air et de la quantité d'air sec ayant traversé le filtre, de la durée de pompage d'air et de chaque arrêt de la pompe.

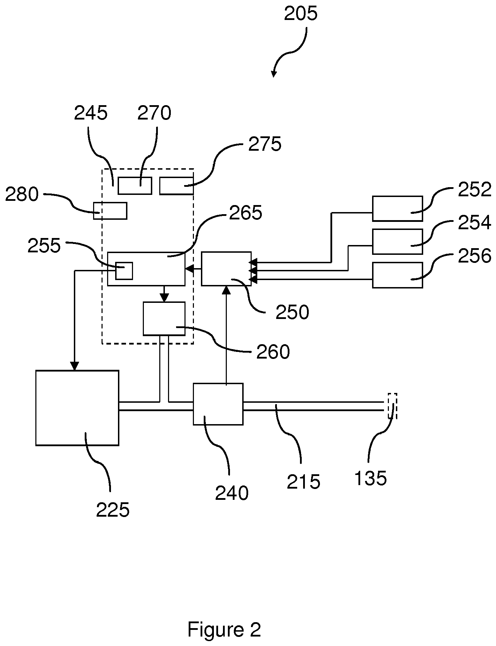

On observe, en figure 2, un dispositif 205 de prélèvement d'air portable en vue d'analyse et de la mesure de quantité d'amiante, fibres et/ou métaux en suspension atmosphérique, qui comporte :

- un tuyau de prélèvement d'air 215, par exemple en silicone.
- une pompe 225 reliée au tuyau 215,
- un filtre 135 intégré à un support de filtre 210 configuré pour retenir des particules en suspension dans l'air pompé, ce support de filtre 210 étant en tête du tuyau 215,
- un débitmètre massique 240 qui mesure le débit massique d'air traversant le filtre 135,
- un capteur de pression atmosphérique 252,
- un capteur de température atmosphérique 254,
- un capteur de taux d'humidité dans l'air 256,
- un moyen 245 de modulation du débit d'air traversant le filtre 135 et
- un moyen 250 d'asservissement du moyen de modulation 245 en fonction du débit massique mesuré par le débitmètre 240.

Dans des modes de réalisation, les capteurs 252, 254 et 256 sont intégrés ou associés au débitmètre massique 240. Préférentiellement, le débitmètre massique 240 comporte les capteurs 254 et 256 et réalise ainsi une compensation en température et en humidité faisant partie du moyen d'asservissement 250.

Le moyen 250 d'asservissement du moyen de modulation 245 est configuré pour que, en fonction du débit massique, de la température, du taux d'humidité et de la pression atmosphérique, le débit, mesuré en moles d'air sec par unité de temps, soit sensiblement constant.

Une électrovanne 260 est placée en parallèle du circuit d'aspiration de la pompe afin d'éviter l'effet de pompage à très faible débit, pour les débits à travers le filtre allant de 50 ml/mn à 2 l/mn. Cette électrovanne 260 est disposée sur le chemin de l'air, en amont de la pompe 225 et en aval du débitmètre 240 pour laisser entrer dans le circuit d'air une quantité d'air ne provenant pas de la tête de prélèvement 110. Le débitmètre 240 mesure ainsi bien le débit d'air traversant le filtre 135.

Dans ce mode de réalisation, l'électrovanne 260 ne sert pas à l'asservissement du débit, la pompe 225 fournissant un débit d'air commandé par un variateur de tension 255 incorporé dans un circuit électronique de régulation 265.

Le filtre 135 est tenu en position par le support de filtre 210. Le filtre 135 est adaptée à retenir des particules de 0,45 micromètres et plus.

Le débitmètre massique 240 est, préférentiellement, compensé en température.

Le moyen de modulation 245 comporte l'électrovanne 260, commandée en tout ou rien par le circuit électronique de régulation 265, dont le variateur de tension commande le débit de la pompe 225.

La pompe 225 permet un débit d'air à travers le support de filtre 210 et le filtre 135 allant de 50 ml/mn à 8 l/mn. L'électrovanne 260 est maintenue fermée pour les débits d'air à travers le filtre 135 allant de 3 l/mn à 8 l/mn, pour éviter les effets de micro pompage et ouverte pour les débits inférieurs à 3 l/mn.

Le circuit électronique de régulation 265 est aussi configuré pour arrêter la pompe 225 en cas de chute du débit mesuré par le débitmètre 240 en deçà d'une valeur prédéterminée et à relancer la pompe après une durée prédéterminée, par exemple de cinq secondes. Grâce à cette régulation du débit, avec compensation de pertes de charge, le débit reste, en permanence à moins de 3 % de la valeur consigne.

Trois touches de réglage et/ou une molette de défilement ainsi qu'un système de verrouillage 270, de type connu, permettent à l'opérateur de régler, en dialogue avec le circuit 265, les valeurs de consignes qui sont alors simultanément affichées sur un écran 275 :

- heure, date, jour,
- le débit programmé,
- durée ou périodes de prélèvement programmée(s),
- la remise à zéro d'un compteur de durée de prélèvement,
- la remise à zéro d'un compteur volumétrique,
- codes de mise en service d'une mémoire amovible 180 et
- code totalisateur compteur horaire et volumétrique, pour maintenance et SAV.

Le circuit 265 et l'écran 275 sont aussi adaptés à afficher :

- le débit instantané,
- la valeur du compteur horaire de durée de prélèvement,
- la valeur du compteur volumétrique d'air prélevé et
- l'état de charge de la batterie (autonomie 8 heures).

La mémoire amovible 280 est, par exemple, une carte SD (sigle de l'expression en anglais « Secure Digital » pour numérique sécurisé) ou une clé USB, (acronyme de Universal Serial Bus, pour bus série universelle).

Le circuit électronique de régulation 265 est aussi configuré pour provoquer la mémorisation dans la mémoire amovible 280, de la quantité d'air ayant traversé le filtre, de la durée de pompage d'air et de chaque arrêt de la pompe.

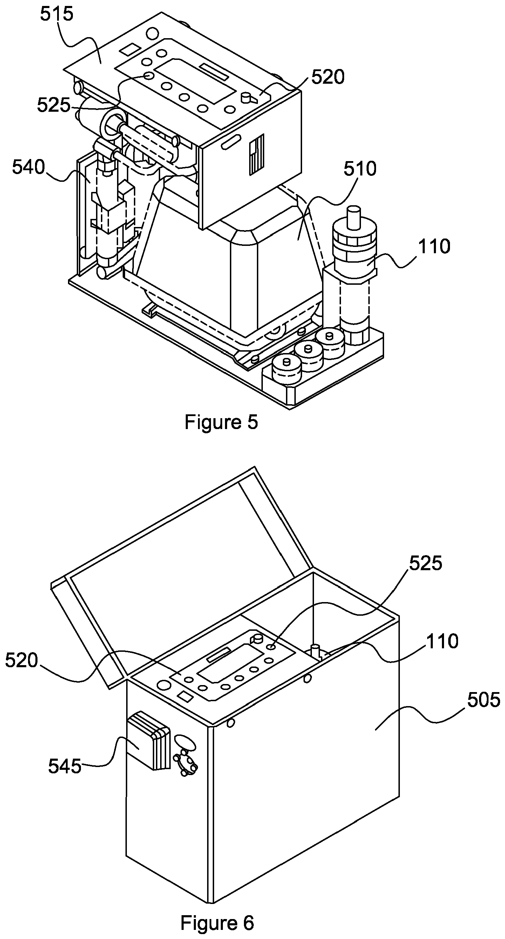

Préférentiellement, le dispositif 205 est incorporé, hormis le support filtre 210 et le tuyau 215, dans un boîtier rigide 505 (figure 6) de dimensions d'environ 100 x 100 x 50 mm.

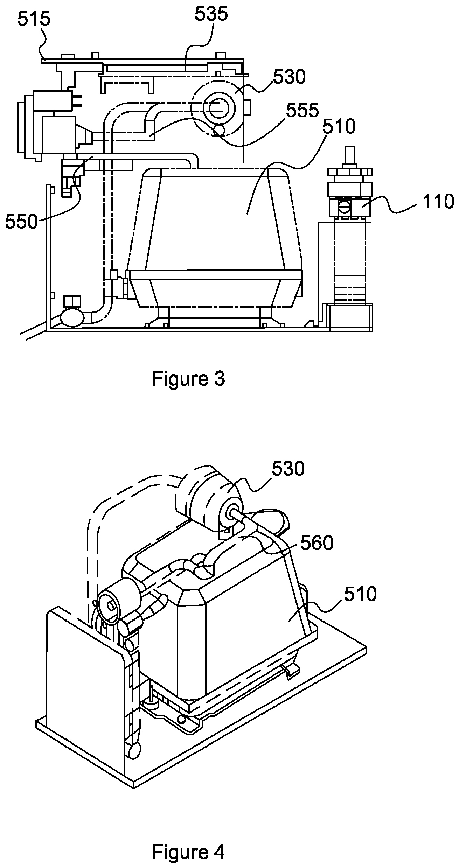

On observe aussi, en figures 3 à 6, un ensemble pompe 510, une tôle formant support 515, un LEXAN (marque déposée) de protection d'écran 520, un clavier de commande 525, un filtre dix microns 530, la tête de prélèvement 110, une carte électronique d'afficheur 535, une carte électronique de puissance 540, une prise électrique 545 et des tuyaux en silicone 550 et 555.

Comme illustré en figures 7 et 8, la tête de prélèvement 110 comporte une partie amovible 315 qui se solidarise sur une partie 305 solidaire de la perche de prélèvement 115 par verrouillage en un quart de tour. Un porte filtre 310 est intégré dans la partie 305 de manière à supporter un filtre 135 (non représenté dans les figures 7 et 8) pincé entre les parties 305 et 315. La tête permet d'insérer des filtres type MILLIPORE (marque déposée), qui bloquent des particules de 0,45 micromètres. Une douille paramétrée 320 permet le verrouillage de ces parties 305 et 315 autour du filtre.

Un tube 325 va de la douille 320, dont il est séparé par une rondelle d'arrêt 345, jusqu'à des ouvertures de passage d'air 330. L'intérieur du tube 325 présente une partie conique 335 destinée à limiter les turbulences de l'air et les risques de dépôt de particules d'amiante. Un repère 340 forme un cône de passage d'air comportant huit orifices cylindriques de 1,6 mm de diamètre. Ce cône assure le prélèvement de la fraction thoracique suivant la norme NF X 43-050, annexe G).

Un fond bombé 350 évite, lorsque la tête de prélèvement 110 est dans la position verticale, comme illustré en figure 1, que des particules lourdes pénètrent dans la tête de prélèvement 110. Deux joints toriques 360 et 365, positionnés entre les parties 305 et 315 assurent une étanchéité meilleure que des joints plats.

La pièce 315 se fixe sur la partie 305 de sorte à être verrouillée en un quart de tour de la douille 320, lors du montage. Cela permet à l'opérateur de facilement mettre en place l'appareil dans des conditions où l'accès est difficile. On rappelle que, actuellement, toutes les têtes sont verrouillées par double clipsage, ce qui nécessite que l'opérateur utilise ses deux mains pour l'opération.

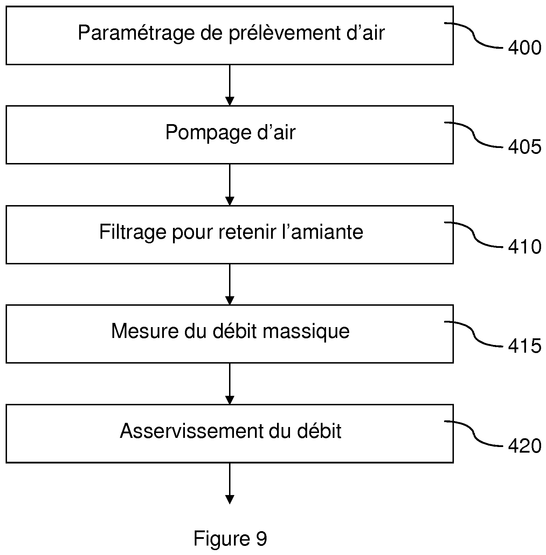

On observe, en figure 9, dans un mode de réalisation particulier du procédé de prélèvement d'air pour mesure de quantité de particules en suspension atmosphérique :

- une étape 400 de paramétrage de la durée et/ou des périodes de prélèvement d'air, et du débit d'air,
- une étape 405 de pompage avec une pompe reliée à une tête de prélèvement d'air,
- une étape 410 de filtrage pour retenir des particules en suspension dans l'air pompé,
- une étape 415 de mesure de débit massique pour mesurer le débit massique d'air traversant le filtre et
- une étape 420 d'asservissement du débit mesuré en moles d'air sec par unité de temps en fonction du débit massique, de la température, du taux d'humidité et de la pression atmosphérique.

Préférentiellement, le procédé comporte aussi au moins une des étapes suivantes (non représentées) :

- une étape d'arrêt de la pompe pour arrêter la pompe en cas de chute de débit supérieur à une valeur prédéterminée et une étape de redémarrage de la pompe après une durée prédéterminée d'arrêt,
- une étape de mémorisation par une mémoire amovible de la quantité d'air sec ayant traversé le filtre, de la durée de pompage d'air et de chaque arrêt de la pompe et/ou
- une étape de mémorisation par une mémoire amovible, de la quantité d'air ayant traversé le filtre, de la durée de pompage d'air et de chaque arrêt de la pompe.

Chacune de ces étapes est décrite précédemment en regard des éléments matériels qui les implémentent. Aucune de ces étapes n'est donc détaillée ici.

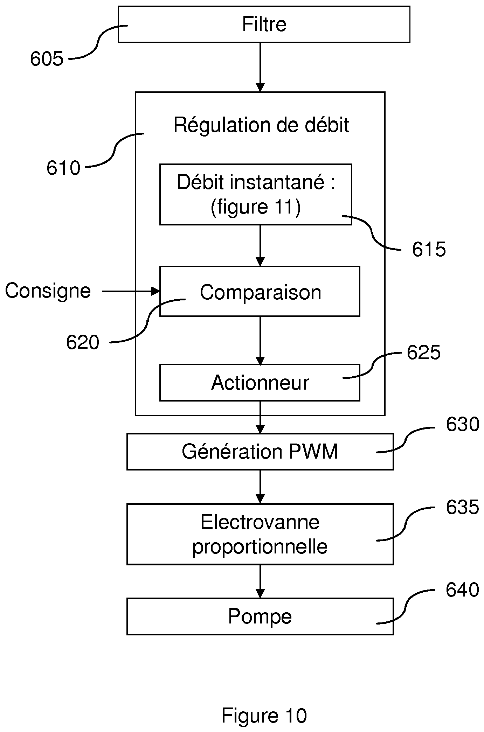

On observe, en figure 10, le bloc de filtrage 605, qui retient les particules d'intérêt, c'est-à-dire des particules à prélever. Cependant des poussières viennent aussi se déposer sur le filtre.

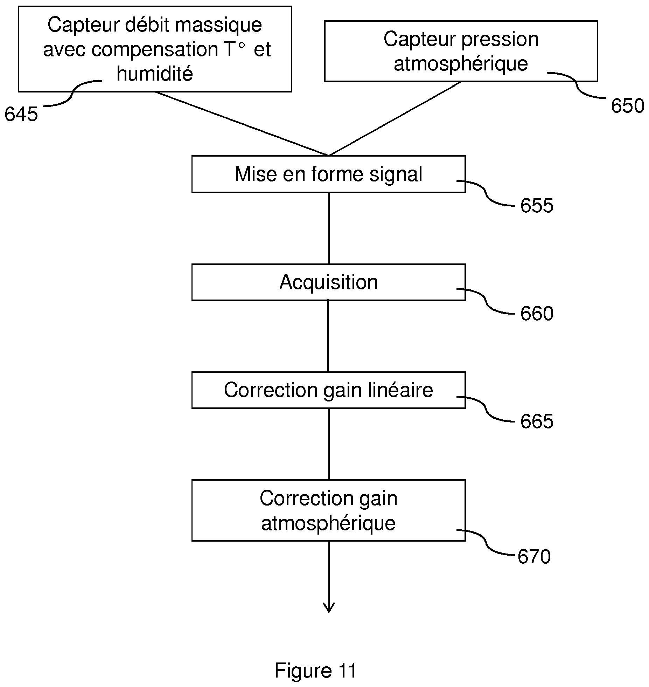

Un bloc 610 réalise la régulation de débit d'air instantané. A cet effet, une fonction 615 détermine le débit d'air massique effectif. Dans cette fonction, détaillée en figure 11, une fonction de capture 645 de débit massique réalise une compensation en température et en humidité en intégrant des captures de température et d'humidité. Par ailleurs, une fonction de capture de pression atmosphérique 650 fournit la pression atmosphérique.

Une fonction de mise en forme de signal 655 met en forme les signaux issus des fonctions 645 et 650. Une fonction d'acquisition 660 numérise les signaux mis en forme. Une fonction 665 réalise une correction de gain linéaire. Enfin, une fonction 670 de correction de gain atmosphérique fournit un débit massique d'air sec instantané compensé en fonction de la pression atmosphérique.

Revenant à la figure 10, on observe que le débit massique d'air sec instantané compensé en température, pression et humidité est comparé par une fonction 620 de la fonction de régulation 610, à la consigne fournie par l'utilisateur ou par un calculateur (non représenté). Le résultat de cette différence fournit la commande d'une fonction 625 d'un actionneur, qui permet la génération d'une modulation de largeur de phase 630. Le signal modulé en largeur de phase commande une électrovanne proportionnelle 635 pour commander le débit d'une pompe 640.

Comme on le comprend à la lecture de la description qui précède, grâce à la mise en œuvre de la présente invention, la masse d'air sec traversant le filtre est mesurée et asservie. Le prélèvement est donc répétable et les résultats d'analyse et/ou de mesure de quantité sont plus fiables. La détection de particules d'amiante est ainsi normalisée en fonction de la masse d'air. Ces dispositions permettent aussi de compenser la perte de charge créée par l'empoussièrement progressif de la membrane lors de la durée du prélèvement par procédé électronique.

L'application principale de la présente invention concerne le prélèvement des fibres d'amiante. Une utilisation plus large pour le prélèvement d'autres types de fibres est également possible, notamment en ce qui concerne les fibres de :

- céramiques,
- bois,
- silice et
- laine de verre.

La sécurité sociale ne reconnait actuellement pas les maladies liées à l'absorption de ces fibres et aucunes normes n'existent. Des études plus ou moins avancées selon le domaine, laissent à penser que certaines d'entre elles sont potentiellement cancérigènes.

**Revendications**

1. Dispositif (105, 205) de prélèvement d'air en vue d'analyse et de la mesure de quantité de particules en suspension atmosphérique, qui comporte :

   - une entrée (110, 215) de prélèvement d'air,
   - une pompe (125, 225) reliée à ladite entrée de prélèvement d'air,
   - un filtre (135) configuré pour retenir des particules en suspension dans l'air pompé,
   - un débitmètre massique (140, 240) configuré pour mesurer le débit massique d'air traversant le filtre,
   - un capteur de pression atmosphérique (152,252),
   - un capteur de température atmosphérique (154,254),
   - un capteur de taux d'humidité dans l'air (156,256),
   - un moyen (145, 160, 165, 245, 255) de modulation du débit d'air traversant le filtre,
   **caractérisé en ce que** le dispositif (105, 205) de prélèvement d'air en vue d'analyse et de la mesure de quantité de particules en suspension atmosphérique comporte en outre
   - un moyen (150) d'asservissement du moyen de modulation en fonction du débit massique, de la température, du taux d'humidité et de la pression atmosphérique configuré pour que le débit mesuré en moles d'air sec par unité de temps soit sensiblement constant.

2. Dispositif (105, 205) selon la revendication 1, dans lequel le moyen de modulation comporte une vanne proportionnelle (160).

3. Dispositif (105, 205) selon l'une des revendications 1 ou 2, qui comporte une tête de prélèvement (110) qui se fixe sur une partie solidaire d'une perche (115) de prélèvement, par verrouillage en un quart de tour.

4. Dispositif (105, 205) selon l'une des revendications 1 à 3, dans lequel l'entrée de prélèvement (110, 215) est adaptée à tenir en position un filtre (135) qui retient des particules de 0,45 micromètres.

**5.** Dispositif (105, 205) selon l'une des revendications 1 à 4, dans lequel la pompe (125, 225) est commandée par une régulation électronique à variation de tension (255).

**6.** Dispositif (205) selon l'une des revendications 1 à 5, dans lequel une électrovanne (260) est disposée entre l'entrée de prélèvement d'air (215) et l'aspiration de la pompe (225).

**7.** Dispositif (105, 205) selon l'une des revendications 1 à 6, qui comporte un moyen (165, 265) d'arrêt de la pompe (125, 225) configuré pour arrêter la pompe en cas de chute de débit supérieur à une valeur prédéterminée et à relancer la pompe après une durée prédéterminée.

**8.** Dispositif (105, 205) selon l'une des revendications 1 à 7, qui comporte un moyen de mémorisation par une mémoire amovible (180, 280) de la quantité d'air sec ayant traversé le filtre (135), de la durée de pompage d'air et de chaque arrêt de la pompe (125, 225).

**9.** Dispositif (105, 205) selon l'une des revendications 1 à 7, qui comporte un moyen de mémorisation par une mémoire amovible (180, 280) de la quantité d'air ayant traversé le filtre (135), de la durée de pompage d'air et de chaque arrêt de la pompe (125, 225).

**10.** Procédé de prélèvement d'air en vue d'analyse et de la mesure de quantité de particules en suspension atmosphérique, mettant en œuvre le dispositif selon l'une des revendications 1 à 9, le procédé comportant :

- une étape (405) de pompage avec la pompe reliée à l'entrée de prélèvement d'air,
- une étape (410) de filtrage pour retenir des particules en suspension dans l'air pompé,
- une étape (415, 610, 615, 645) de mesure de débit massique pour mesurer le débit massique d'air traversant le filtre,
- une étape (645) de mesure de la température atmosphérique,
- une étape (645) de mesure du taux d'humidité dans l'air,
- une étape (650) de mesure de la pression atmosphérique,
**caractérisé en ce que** le procédé de prélèvement d'air en vue d'analyse et de la mesure de quantité de particules en suspension atmosphérique comporte en outre
- une étape (420) d'asservissement du débit mesuré en moles d'air sec par unité de temps en fonction du débit massique, de la température, du taux d'humidité et de la pression atmosphérique.

**11.** Procédé selon la revendication 10, qui comporte une étape d'arrêt de la pompe pour arrêter la pompe en cas de chute de débit supérieur à une valeur prédéterminée et une étape de redémarrage de la pompe après une durée prédéterminée d'arrêt.

**12.** Procédé selon l'une des revendications 10 ou 11, qui comporte une étape de mémorisation par une mémoire amovible de la quantité d'air sec ayant traversé le filtre, de la durée de pompage d'air et de chaque arrêt de la pompe.

**13.** Procédé selon l'une des revendications 10 à 12, qui comporte une étape de mémorisation par une mémoire amovible, de la quantité d'air ayant traversé le filtre, de la durée de pompage d'air et de chaque arrêt de la pompe.

**Patentansprüche**

**1.** Vorrichtung (105, 205) zur Luftentnahme zwecks Analyse und Messung der Menge an atmosphärischen Schwebstoffen, die umfasst:

- einen Eingang (110, 215) zur Luftentnahme,
- eine Pumpe (125, 225), die mit dem genannten Eingang zur Luftentnahme verbunden ist,
- einen Filter (135), der zum Zurückhalten von Schwebstoffen in der gepumpten Luft ausgestaltet ist,
- einen Durchflussmeter der Masse (140, 240), der zum Messen des Massedurchsatzes der den Filter durchquerenden Luft ausgestaltet ist,
- einen atmosphärischen Drucksensor (152, 252),
- einen atmosphärischen Temperatursensor (154, 254),
- einen Sensor für die Luftfeuchtigkeit (156, 256),
- ein Modulationsmittel (145, 160, 165, 245, 255) für den den Filter durchquerenden Luftdurchsatz,

**dadurch gekennzeichnet, dass** die Vorrichtung (105, 205) zur Luftentnahme zwecks Analyse und Messung der Menge an atmosphärischen Schwebstoffen, darüber hinaus umfasst:

- ein Regelungsmittel (150) des Modulationsmittels in Abhängigkeit von dem Massedurchsatz, der Temperatur, des Feuchtigkeitsgehaltes und des atmosphärischen Drucks, das ausgestaltet ist, damit der Durchsatz, der in Mol Trockenluft pro Zeiteinheit gemessen ist, deutlich konstant ist.

**2.** Vorrichtung (105, 205) gemäß Anspruch 1, bei dem das Modulationsmittel einen proportionalen Schieber (160) umfasst.

3. Vorrichtung (105, 205) gemäß einem der Ansprüche 1 oder 2, der einen Entnahmekopf (110) umfasst, der per Verriegelung um eine Vierteldrehung auf einem Teil befestigt ist, der fest mit einer Entnahmestange (115) verbunden ist.

4. Vorrichtung (105, 205) gemäß einem der Ansprüche 1 bis 3, bei der der Entnahmeeingang (110, 215) geeignet ist, um einen Filter (135) in Position zu halten, der 0,45 große Mikrometer-Partikel zurückhält.

5. Vorrichtung (105, 205) gemäß einem der Ansprüche 1 bis 4, bei der die Pumpe (125, 225) durch eine elektronische Regulierung mit Spannungsvariation (255) gesteuert ist.

6. Vorrichtung (205) gemäß einem der Ansprüche 1 bis 5, bei der ein Magnetventil (260) zwischen dem Eingang der Luftentnahme (215) und der Ansaugung der Pumpe (225) angeordnet ist.

7. Vorrichtung (105, 205) gemäß einem der Ansprüche 1 bis 6, die ein Arretiermittel (165, 265) der Pumpe (125, 225) umfasst, das zum Arretieren der Pumpe bei einem Absturz des Durchsatzes auf mehr als einen vorbestimmten Wert und zum Neustarten der Pumpe nach einer vorbestimmten Dauer ausgestaltet ist.

8. Vorrichtung (105, 205) gemäß einem der Ansprüche 1 bis 7, die ein Speichermittel durch einen abnehmbaren Speicher (180, 280) der Menge an trockener Luft, die den Filter (135) durchquert hat, der Pumpendauer von Luft und jeder Arretierung der Pumpe (125, 225) umfasst.

9. Vorrichtung (105, 205) gemäß einem der Ansprüche 1 bis 7, die ein Speichermittel durch einen abnehmbaren Speicher (180, 280) der Menge an Luft, die den Filter (135) durchquert hat, der Pumpendauer von Luft und jeder Arretierung der Pumpe (125, 225) umfasst.

10. Verfahren zur Luftentnahme zwecks Analyse und Messung der Menge an atmosphärischen Schwebstoffen, das die Vorrichtung gemäß einem der Ansprüche 1 bis 9 umsetzt, wobei das Verfahren umfasst:

- einen Schritt (405) zum Pumpen mit der Pumpe, die mit dem Eingang zur Luftentnahme verbunden ist,
- einen Schritt zum Filtern (410), der zum Zurückhalten von Schwebstoffen in der gepumpten Luft ausgestaltet ist,

- einen Schritt (415, 610, 615, 645) zum Messen des Massedurchsatzes zum Messen des den Filter durchquerenden Luftmasse-Durchsatzes ausgestaltet ist,
- einen Schritt (645) zum Messen der atmosphärischen Temperatur,
- einen Schritt (645) zum Messen des Feuchtigkeitsgehaltes in der Luft,
- einen Schritt (650) zum Messen des atmosphärischen Drucks,

**dadurch gekennzeichnet, dass** das Verfahren zur Luftentnahme zwecks Analyse und Messung der Menge an atmosphärischen Schwebstoffen darüber hinaus umfasst:

- einen Schritt (420) zur Regelung des Massedurchsatzes in Mol Trockenluft per Zeiteinheit in Abhängigkeit von dem Massedurchsatz, der Temperatur, des Feuchtigkeitsgehaltes und des atmosphärischen Drucks.

11. Verfahren gemäß Anspruch 10, das einen Arretierschritt der Pumpe umfasst, um die Pumpe bei einem Absturz des Durchsatzes von mehr als einem vorbestimmten Wert zu arretieren, und einen Schritt zum Neustarten der Pumpe nach einer vorbestimmten Arretierdauer.

12. Verfahren gemäß einem der Ansprüche 10 oder 11, das einen Speicherschritt durch einen abnehmbaren Speicher der Menge an trockener Luft, die den Filter durchquert hat, der Pumpendauer von Luft und jeder Arretierung der Pumpe umfasst.

13. Verfahren gemäß einem der Ansprüche 10 bis 12, das einen Speicherschritt durch einen abnehmbaren Speicher der Menge an Luft, die den Filter durchquert hat, der Pumpendauer von Luft und jeder Arretierung der Pumpe umfasst.

**Claims**

1. Air sampling device (105, 205) for analyzing and measuring the quantity of atmospheric suspended particles, which comprises:

- an inlet (110, 215) for sampling air;
- a pump (125, 225) connected to said air sampling inlet;
- a filter (135) configured to retain particles suspended in the pumped air;
- a mass flowmeter (140, 240) configured to measure the mass flow rate of the air passing through the filter;
- an atmospheric pressure sensor (152, 252);
- an atmospheric temperature sensor (154, 254);
- an air humidity sensor (156, 256);
- a means (145, 160, 165, 245, 255) for regulating the flow rate of air passing through the filter, **characterized in that** the air sampling device (105, 205) for analyzing and measuring the quantity of atmospheric suspended particles also comprises
- a means (150) for controlling the regulation means as a function of the mass flow rate, temperature, humidity level and atmospheric pressure, configured such that the flow rate measured in moles of dry air per unit of time is substantially constant.

2. Device (105, 205) according to claim 1, wherein the regulation means comprises a proportional valve (160).

3. Device (105, 205) according to one of claims 1 or 2, which comprises a sampling head (110), which is attached on an integral portion of a sampling pole (115) by locking one quarter-turn.

4. Device (105, 205) according to one of claims 1 to 3, wherein the sampling inlet (110, 215) is designed to hold a filter (135), which traps particles of 0.45 micrometers, in position.

5. Device (105, 205) according to one of claims 1 to 4, wherein the pump (125, 225) is controlled by means of an electronic variable voltage controller (255).

6. Device (205) according to one of claims 1 to 5, wherein a solenoid valve (260) is positioned between the air sampling inlet (215) and the suction of the pump (225).

7. Device (105, 205) according to one of claims 1 to 6, which comprises a means (165, 265) for stopping the pump (125, 225), configured to stop the pump if the flow rate drop is greater than a predefined value, and to restart the pump after a predefined time.

8. Device (105, 205) according to one of claims 1 to 7, which comprises a means for storing on a removable memory device (180, 280) the amount of dry air that passed through the filter (135), the time of air pumping and of each stoppage of the pump (125, 225).

9. Device (105, 205) according to one of claims 1 to 7, which comprises a means for storing on a removable memory device (180, 280) the amount of air that passed through the filter (135), the time of air pumping and of each stoppage of the pump (125, 225).

10. Air sampling method for analyzing and measuring the quantity of atmospheric suspended particles, utilizing the device according to one of claims 1 to 9, the method comprising:

- a step (405) of pumping, with the pump connected to the air sampling inlet;
- a step (410) of filtering to retain particles suspended in the pumped air;
- a step (415, 610, 615, 645) of measuring the mass flow rate of the air passing through the filter;
- a step (645) of measuring the atmospheric temperature;
- a step (645) of measuring the level of humidity in the air;
- a step (650) of measuring the atmospheric pressure,
**characterized in that** the air sampling method for analyzing and measuring the quantity of atmospheric suspended particles also comprises
- a step (420) of controlling the flow rate measured in moles of dry air per unit of time as a function of the mass flow rate, temperature, humidity level and atmospheric pressure.

11. Method according to claim 10, which comprises a pump stoppage step of stopping the pump if the flow rate drop is greater than a predefined value, and a step of restarting the pump after a predefined stoppage time.

12. Method according to one of claims 10 or 11, which comprises a step of storing on a removable memory the amount of dry air that passed through the filter, the time of air pumping and of each stoppage of the pump.

13. Method according to one of claims 10 to 12, which comprises a step of storing on a removable memory the amount of air that passed through the filter, the time of air pumping and of each stoppage of the pump.

Figure 1

Figure 2

515        535

530

555

510

110

550

Figure 3

530

560

510

Figure 4

Figure 5

Figure 6

Figure 7

Figure 8

Paramétrage de prélèvement d'air — 400

Pompage d'air — 405

Filtrage pour retenir l'amiante — 410

Mesure du débit massique — 415

Asservissement du débit — 420

Figure 9

Figure 10

```
┌─────────────────────────────┐        ┌─────────────────────────────┐
│   Capteur débit massique    │        │      Capteur pression       │
│  avec compensation T° et    │        │      atmosphérique          │
│         humidité            │        │                             │
└─────────────────────────────┘        └─────────────────────────────┘
        645                                              650

                    ┌─────────────────────────────┐
                    │     Mise en forme signal     │
                    └─────────────────────────────┘
                                                      655

                    ┌─────────────────────────────┐
                    │        Acquisition           │
                    └─────────────────────────────┘
                                                      660

                    ┌─────────────────────────────┐
                    │    Correction gain linéaire  │
                    └─────────────────────────────┘
                                                      665

                    ┌─────────────────────────────┐
                    │      Correction gain         │
                    │      atmosphérique           │
                    └─────────────────────────────┘
                                                      670
```

Figure 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6167767 B1
- US 2006234621 A1

- US 2008281528 A1